# EUROPÄISCHE PATENTANMELDUNG

(11) **EP 3 093 331 A1**
(43) Veröffentlichungstag der Anmeldung: **16.11.2016**
(21) Anmeldenummer: 15400018.6
(22) Anmeldetag: 12.05.2015
(51) Int. Cl.: C10B 49/18, C10B 53/02, C10K 1/04, C10K 1/16, C10K 3/00, C10B 49/16

(54) **VERFAHREN UND ANLAGE ZUR HERSTELLUNG UND ABKÜHLUNG VON PYROLYSETEER**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Günther, Armin, 61381 Friedrichsdorf (DE); Demir, Gamze, 60594 Frankfurt a. M. (DE)
(74) Vertreter: Dropsch, Holger

(57) **Zusammenfassung**

Es werden ein Verfahren und eine Anlage zur Schnellpyrolyse von Biomasse, insbesondere von Lignocellulose enthaltender Biomasse angegeben, bei denen die bereitgestellte Biomasse mit einem festen Wärmeträger unter Pyrolysebedingungen umgesetzt wird. Bei der nachfolgenden Auftrennung der Pyrolyseprodukte wird ein flüssiges Produkt, der Pyrolyseteer, erhalten, der auch als Kühlmittel zur Abkühlung der Pyrolyseprodukte verwendet wird. Erfindungsgemäß erfolgt die Temperatureinstellung des Kühlmittels mit Wärmetauschern des Typs Plattenwärmetauscher, Spiralwärmetauscher und Hohlschraubenrotationswärmetauscher.

## Beschreibung

### Gebiet der Erfindung

Die Erfindung betrifft ein Verfahren zur Schnellpyrolyse von Biomasse, insbesondere von Lignocellulose enthaltender Biomasse, also cellulose- und ligninhaltiger Stoffe wie beispielsweise Holz, Stroh, Heu, aber auch Papier, wobei gasförmige und feste Pyrolyseprodukte sowie ein flüssiges Pyrolyseprodukt erhalten wird, das synonym als Pyrolyseteer, Pyrolyseöl, Bioteer oder Bioöl bezeichnet wird. Die Erfindung betrifft auch eine Anlage zur Durchführung der Schnellpyrolyse. Das Verfahren bzw. die Anlage gemäß der Erfindung sind dabei so ausgestaltet, dass das gewonnene Pyrolyseteer-Produkt zeitlich konstant bleibende Eigenschaften aufweist, wodurch seine Verwendung als Kühlmittel im Verfahren selbst ermöglicht wird. Ferner wird somit ein definiertes Produkt mit erwünschten Eigenschaften erhalten.

### Stand der Technik

Die Schnellpyrolyse (synonym Flash-Pyrolyse, Blitzpyrolyse) wird für die Umsetzung von kohlenstoffhaltigen Einsatzstoffen wie Biomasse in flüssige Pyrolyseprodukte (Pyrolyseöl oder Pyrolyseteer) sowie festen Pyrolysekoks und Pyrolysegas eingesetzt, wobei die erhaltenen Pyrolyseprodukte in Bezug auf die eingesetzte Biomasse energetisch verdichtet sind. Bei der Schnellpyrolyse von Biomasse als Einsatzstoff erfolgt die Umsetzung zu den Pyrolyseprodukten unter Sauerstoffausschluss innerhalb weniger Sekunden bei Temperaturen von ca. 400 bis 600 °C, typischerweise um 500 °C, wobei flüssige (Pyrolyseöl), feste (Biokoks) und ein Restanteil gas- oder dampfförmige Pyrolyseprodukte erhalten werden. Einzelheiten zu der Durchführung des Verfahrens finden sich beispielsweise in den internationalen Patentanmeldungen WO 2003/033624 A1 und WO 2007/017005 A1.

Der Wärmebedarf für die Schnellpyrolyse wird in der Regel durch Verbrennen von Pyrolysekoks oder Pyrolysegasen oder einer Kombination von beiden gedeckt. Zusätzlich kann der Wärmeeintrag durch Verbrennen von Hilfsbrennstoffen, beispielsweise Erdgas, erfolgen. Häufig wird dabei ein im Kreislauf geführter, fester Wärmeträger, beispielweise Sand, aufgeheizt, der dann zum Pyrolysereaktor geführt wird und dort die Wärme auf die Biomasse überträgt.

Der Pyrolysereaktor kann beispielsweise als Doppelschnecken-Mischreaktor ausgestaltet sein. Er umfasst dann einen Doppelschneckenreaktor mit zwei parallel zueinander angeordnet gleichsinnig drehenden und dabei ineinander greifenden Förderschnecken, in dem ein kontinuierlicher Biomassefluss mit einem kontinuierlichen Sand- oder Koksfluss als Wärmeüberträger für mehrere Sekunden auf eine Temperatur um 500 °C erhitzt wird. Reaktoren der beschriebenen Art sind seit langem bekannt und werden auch für die Pyrolyse von Raffinerierückständen verwendet, beispielsweise im Lurgi-Ruhrgas-(LR)-Verfahren, das in Ullmann's Encyclopedia of Industrial Chemistry, Sixth Edition, 1998 Electronic Release, Stichwort "Direct Heating with Circulating Heat Carriers" (H.- J. Weiss) beschreiben ist.

Je nach Betriebsbedingungen und eingesetzter Biomasse entstehen bei der Schnellpyrolyse zu 40 bis 70 Gew.-% flüssiges Pyrolyseöl und zu 15 bis 40 % Pyrolysekoks. Den Rest bildet ein nicht kondensierbares Pyrolysegas, dessen Verbrennungswärme zum Aufheizen oder zur Trocknung genutzt werden kann. Die erhaltenen Pyrolyseprodukte können als energieverdichtete Brennstoffe oder als Einsatz für nachfolgende chemische Umsetzungen oder Synthesen dienen. So können feste und flüssige Pyrolyseprodukte in einem Vergasungsreaktor mit einem Vergasungsmittel wie Sauerstoff und/oder Dampf zu einem Wasserstoff und Kohlenoxide enthaltenden Synthesegas umgesetzt werden.

Um die Pyrolyseprodukte zu erhalten, wird zunächst im Produktgas enthaltener Koks über Heißgaszyklone staubförmig abgeschieden. Bei der nachfolgenden Quenchkühlung wird der Pyrolyseteer erhalten, der hinsichtlich seiner rheologischen Eigenschaften Schweröl ähnelt. Bei der schlagartigen Abkühlung gebildete Aerosole werden über einen Elektrofilter zurück gehalten, bevor das wässrige Kondensat bei Umgebungstemperatur erhalten wird. Es verbleibt ein brennbares Pyrolysegas, das im Wesentlichen aus Kohlendioxid und Kohlenmonoxid sowie Kohlenwasserstoffen besteht und für die Rauchgaserzeugung Verwendung finden kann.

Der erhaltene Pyrolyseteer, der noch einen Anteil fester Pyrolyseprodukte enthält, wird teilweise zu der Quenchkühlung zurückgeführt und dient dort als Kühlmittel zur Abkühlung der heißen Pyrolysegas bzw. -dämpfe. Dies wird beispielsweise in der Studi® "Production of Gasoline and Diesel from Biomass via Fast Pyrolysis, Hydrotreating and Hydrocracking: A Design Case", S. B. Jones et al., US Department Of Energy, PNNL-18284 Rev. 1 (Februar 2009), Kapitel 5.1, dargelegt.

Der Pyrolyseteer ist ein komplexes Gemisch von Wasser und sauerstoffreichen organische Verbindungen, beispielsweise Alkohole, organische Säuren, Ether, Ester, Aldehyde, Ketone, Phenole usw. darstellt, wie es in dem Artikel von S. Wang, "High-Efficiency Separation of Bio-Oil", http://dx.doi.org/10.5772/51423, abgerufen am 29.01.2015, dargelegt wird. Nachteilig ist es dabei, dass es aufgrund dieser komplexen chemischen Zusammensetzung und der thermischen Belastung in der Quenchkühlung zu Alterungsreaktionen des Pyrolyseteers kommt, die z. B. Polymerisationen, Crack- und sonstige Abbaureaktionen und Oxidationsreaktionen umfassen. Hierdurch werden die rheologischen und weitere Stoffeigenschaften in unerwünschter Weise geändert; so steigt beispielsweise die dynamische Viskosität kontinuierlich an, falls nicht geeignete Gegenmaßnahmen ergriffen werden. Daher wird die Verwendungsfähigkeit des Pyrolyseteers als Kühlmittel und in nachfolgenden Umwandlungsstufen negativ beeinflusst. Problematisch bei der Handhabung des als Reaktionsprodukt der Schnellpyrolyse erhaltenen Pyrolyseteers ist ferner die Tatsache, dass er aufgrund seines Wassergehalts zur Phasentrennung neigt. Dies ist insbesondere bei hohen Wassergehalten der Fall und für die Lagerung und Weiterverarbeitung des Pyrolyseteers ungünstig und daher unerwünscht. Der maximal tolerierbare Wassergehalt ohne Auftreten einer Phasentrennung wird von Prabir Basu, "Biomass Gasification, Pyrolysis and Torrefaction: Practical Design and Theory", 2nd Edition, 2013, Seite 308, mit 50 % angegeben. Er ist allerdings stark von den Ausgangsstoffen und der Verfahrensführung des Pyrolyseverfahrens und der nachgeschalteten Behandlungsschritte abhängig.

### Beschreibung der Erfindung

Vor diesem Hintergrund besteht die Aufgabe der vorliegenden Erfindung darin, ein zeitlich konstant und stabil arbeitendes Verfahren und eine entsprechende Anlage für die Schnellpyrolyse von Biomasse zu Pyrolyseprodukten anzugeben, in dem bzw. in der das gewonnene Pyrolyseteer-Produkt konstante Eigenschaften aufweist, wodurch seine Verwendung als Kühlmittel im Verfahren selbst ermöglicht wird und ferner ein definiertes Produkt mit erwünschten Eigenschaften erhalten wird. Diese Aufgabe wird im Wesentlichen durch ein erfindungsgemäßes Verfahren mit den Merkmalen des Anspruchs 1 und durch eine erfindungsgemäße Anlage mit den Merkmalen des Anspruchs 7 gelöst:

### Erfindungsgemäßes Verfahren:

Verfahren zur Herstellung von Pyrolyseprodukten aus Biomasse, insbesondere lignocellulosehaltiger Biomasse, umfassend folgende Schritte:
a) Bereitstellen der Biomasse in förderfähiger Form,
b) Aufheizen eines Wärmeträgers in einer Heizvorrichtung in direktem Wärmetausch gegen ein heißes Rauchgas, das durch Verbrennen eines oder mehrerer Brennstoffe mit einem sauerstoffhaltigen Oxidationsmittel erzeugt wird, Ausleiten des aufgeheizten Wärmeträgers und des abgekühlten Rauchgases aus der Heizvorrichtung,
c) Inkontaktbringen der Biomasse mit dem aufgeheizten Wärmeträger in einem Pyrolysereaktor, wobei gas- und dampfförmige sowie feste Pyrolyseprodukte erhalten und aus dem Pyrolysereaktor ausgeleitet werden,
d) Abtrennen der festen Pyrolyseprodukte von den gas- und dampfförmigen Pyrolyseprodukten mittels einer ersten mechanischen Trennvorrichtung und Ausleiten der festen Pyrolyseprodukte aus dem Verfahren,
e) Abkühlen der an festen Pyrolyseprodukten abgereicherten gas- und dampfförmigen Pyrolyseprodukte in einer Abkühlvorrichtung, wobei ein Pyrolysegas und ein Pyrolyseteer erhalten werden,
f) Abtrennen des Pyrolysegases von dem Pyrolyseteer mittels einer zweiten mechanischen Trennvorrichtung und Ausleiten des Pyrolysegases aus dem Verfahren, wobei das Pyrolysegas mindestens teilweise als Brennstoff nach Verfahrensschritt b) zurückgeführt wird,
g) mindestens teilweise Rückführung des Pyrolyseteers nach Verfahrensschritt e) als Kühlmittel,
wobei der nach Verfahrensschritt e) zurückgeführte Pyrolyseteer vor Einleiten in die Abkühlvorrichtung in einem Wärmetauscher, ausgewählt aus der Gruppe umfassend Plattenwärmetauscher, Spiralwärmetauscher und Hohlschraubenrotationswärmetauscher, abgekühlt wird.

### Erfindungsgemäße Anlage:

Anlage zur Herstellung von Pyrolyseprodukten aus Biomasse, insbesondere lignocellulosehaltiger Biomasse, umfassend folgende Anlagenteile:
- Fördervorrichtungen für die bereitgestellte Biomasse, den Wärmeträger und die festen Pyrolyseprodukte,
- eine Heizvorrichtung zum Aufheizen eines Wärmeträgers in direktem Wärmetausch gegen ein heißes Rauchgas, umfassend Mittel zum Zuleiten des kalten Wärmeträgers, zum Ableiten des aufgeheizten Wärmeträgers, zum Zuleiten sauerstoffhaltigen Oxidationsmittels und eines oder mehrerer Brennstoffe und zum Ableiten eines abgekühlten Rauchgases,
- einen Pyrolysereaktor, umfassend Mittel zum Ableiten der gas- und dampfförmigen sowie festen Pyrolyseprodukte,
- eine erste mechanische Trennvorrichtung zum Abtrennen der festen Pyrolyseprodukte von den gas- und dampfförmigen Pyrolyseprodukten,
- eine Abkühlvorrichtung zum Abkühlen der an festen Pyrolyseprodukten abgereicherten gas- und dampfförmigen Pyrolyseprodukte,
- eine zweite mechanische Trennvorrichtung zum Abtrennen des Pyrolysegases von dem Pyrolyseteer, umfassend Mittel zum Ausleiten des Pyrolysegases aus dem Verfahren und zum mindestens teilweise Rückführen des Pyrolysegases als Brennstoff nach Verfahrensschritt b), sowie Mittel zum Ausleiten des Pyrolyseteers und zum mindestens teilweise Rückführen des Pyrolyseteers zu der Abkühlvorrichtung als Kühlmittel,
- einen Wärmetauscher, ausgewählt aus der Gruppe umfassend Plattenwärmetauscher, Spiralwärmetauscher und Hohlschraubenrotationswärmetauscher, zum Abkühlen des zu der Abkühlvorrichtung als Kühlmittel zurückgeführten Pyrolyseteers.

Weitere vorteilhafte Ausgestaltungen des erfindungsgemäßen Verfahrens und der erfindungsgemäßen Anlage finden sich in den jeweiligen Unteransprüchen.

Unter dem Bereitstellen der Biomasse in förderfähiger Form sollen alle dem Fachmann geläufigen Formen der Aufbereitung, Vorbereitung oder Konditionierung verstanden werden, die es ermöglichen, die Biomasse in einen Zustand zu verbringen, der es gestattet, sie mit gängigen Fördermethoden den einzelnen Verfahrensschritten zuzuführen und sie ferner zwischenzulagern, ohne dass dieser Zustand wesentlich negativ beeinflusst wird. Das Bereitstellen kann beispielsweise das Zerkleinern, Klassieren, Trocknen, Formgebungsschritte wie das Pelletieren sowie die Einstellung eines silofähigen Zustands umfassen.

Als mechanische Trennvorrichtungen werden grundsätzlich alle Vorrichtungen verstanden, die eine Stofftrennung aufgrund mechanischer oder elektromechanischer Einwirkungen gestatten, wie beispielsweise Filter, Elektrofilter, Zyklone, Sedimentationsvorrichtungen.

Mit dem Begriff Biomasse wird die Stoffmasse von Lebewesen oder deren Teile bzw. Körperteile bezeichnet. Im Rahmen der vorliegenden Erfindung wird darunter insbesondere lignocellulosehaltige Biomasse verstanden.

Unter Inkontaktbringen in Verfahrensschritt c) des erfindungsgemäßen Verfahrens wird das Zusammenführen der Biomasse mit dem aufgeheizten Wärmeträger im Pyrolysereaktor unter intensivem Vermischen und unter den Bedingungen des intensiven, direkten Wärmetauschs durch direkte Wärmeübertragung verstanden.

Geeignete Pyrolysereaktoren sind dem Fachmann aus dem einschlägigen Stand der Technik an sich bekannt. Insbesondere werden darunter alle Reaktorsysteme verstanden, die einen Transport des Gemisches aus Biomasse und Wärmeträger durch das Reaktorinnere gestatten, wodurch eine definierte Verweilzeit dieses Gemisches bei Pyrolysebedingungen im Zeitbereich von Sekunden bis Minuten eingestellt werden kann.

Unter Pyrolysebedingungen werden physikalisch-chemische Bedingungen verstanden, die eine thermochemische Spaltung organischer Verbindungen unter weitgehend nichtoxidativen Bedingungen ermöglichen. Sie sind aus dem Stand der Technik an sich bekannt um umfassen die Einstellung hoher Temperaturen und die weitgehende Abwesenheit von Oxidationsmitteln, also beispielsweise das Erhitzen unter Luftabschluss. Die Pyrolysebedingungen wird der Fachmann in Abhängigkeit von der zu behandelnden Biomasse geeignet auswählen.

Unter Mitteln zum Ableiten der gas- und dampfförmigen sowie der festen Pyrolyseprodukte aus dem Pyrolysereaktor, Mitteln zum Ausleiten des Pyrolysegases aus dem Verfahren und zum mindestens teilweise Rückführen des Pyrolysegases sowie Mitteln zum Ausleiten und zum mindestens teilweise Rückführen des Pyrolyseteers sind alle verfahrenstechnischen Vorrichtungen zu verstehen, die die genannten Förderaufgaben lösen können. Insbesondere sind dies Zugangs- oder Abgangsstutzen aus den entsprechenden Apparaten oder Bereichen, Rohrleitungen und - sofern benötigt - Fördervorrichtungen wie beispielsweise Pumpen, Gebläse, Verdichter, Förderschnecken, Zellenradschleusen oder ähnliches.

Unter der Abkühlvorrichtung werden alle Vorrichtungen verstanden, die sich im Rahmen der vorliegenden Erfindung für die Abkühlung des Pyrolyseteers eignen. Insbesondere wird darunter eine Quenchvorrichung verstanden, die eine rasche Abkühlung der gasund dampfförmigen Pyrolyseprodukte ermöglicht. Bevorzugt wird dabei ein Teil des rückgeführten, abgekühlten Pyrolyseteers als Kühlmittel benutzt. Dieser wird über eine Verteilungsvorrichtung, beispielsweise eine Düse, in den oberen Teil des Quenchs eingespritzt, wodurch es zu einem direkten Wärmeaustausch mit den heißen gas- und dampfförmigen Pyrolyseprodukten kommt. Dem Quench wird dabei bevorzugt ein Kondensator und eine Phasentrennvorrichtung nachgeschaltet.

Der Erfindung liegt die Erkenntnis zugrunde, dass für einen zeitlich stabilen Betrieb des erfindungsgemäßen Verfahrens bzw. der entsprechenden Anlage die Beschaffenheit des Wärmetauschers, mit dem der Pyrolyseteer vor seiner Rückführung als Kühlmittel in die Abkühlvorrichtung auf die erwünschte Temperatur abgekühlt wird, von zentraler Bedeutung ist. Einerseits muss der Wärmetauscher zur Beaufschlagung mit flüssigen Medien geeignet sein, die eine mittlere bis hohe dynamische Viskosität aufweisen. Typische Werte liegen hierbei oberhalb von 50 mPa·s, teilweise sogar oberhalb von 70 mPa·s. Andererseits ist es günstig, wenn sich das zu kühlende flüssige Medium, also der Pyrolyseteer, nicht im Sinne einer Rohrströmung entlang einer Hauptströmungsrichtung durch ein Wärmetauscherrohr mit begrenztem Durchmesser, sondern auch senkrecht zur Hauptströmungsrichtung strömt, sich also eher flächenhaft durch den Wärmetauscher bewegt. Hierdurch können gegebenenfalls auftretende Blockierungen durch Feststoffablagerungen leicht umströmt werden, ohne dass es zu einer drastischen Erhöhung des Druckverlustes über den Wärmetauscher kommt. Geeignete Wärmetauscher im Sinne der Erfindung sind daher beispielsweise Plattenwärmetauscher, Spiralwärmetauscher und Hohlschraubenrotationswärmetauscher, wenig geeignet sind dagegen Rohrbündelwärmetauscher.

### Bevorzugte Ausgestaltungen der Erfindung

Eine bevorzugte Ausgestaltung des erfindungsgemäßen Verfahrens ist dadurch gekennzeichnet, dass der nach Verfahrensschritt e) zurückgeführte Pyrolyseteer vor Einleiten in die Abkühlvorrichtung auf eine Temperatur zwischen 70 und 100 °C, bevorzugt zwischen 80 und 90 °C abgekühlt wird. Es hat sich gezeigt, dass bei Auswahl dieser Temperaturbereiche ein günstiger Kompromiss hinsichtlich folgender wichtiger Parameter erhalten wird, deren Temperaturabhängigkeit gegenläufig ist

Viskosität. Bei einer klassischen, thermisch und chemisch stabilen Flüssigkeit nimmt die dynamische Viskosität bei steigenden Temperaturen ab, wobei sich die Temperaturabhängigkeit durch eine Gleichung vom Arrhenius-Typ beschreiben lässt. Beim Pyrolyseteer wird dagegen eine Zunahme der dynamischen Viskosität mit steigender Temperatur beobachtet. Es wird vermutet, dass sich diese Beobachtung auf durch steigende Temperaturen schneller verlaufende Polymerisationsreaktionen zurückführen lässt. Dieses Verhalten ist insbesondere bei Temperaturen oberhalb von 100 °C stark ausgeprägt.

Wassergehalt und Phasenstabilität. In Abhängigkeit vom Wassergehalt neigt der Pyrolyseteer zur Auftrennung eine zwei flüssige Phasen. Unterhalb eines Wassergehalts von ca. 20 bis 25 Gew.-% ist das System einphasig. Der Wassergehalt des Pyrolyseteers hängt wiederum stark von seiner Temperatur ab und nimmt mit abnehmender Temperatur zur. So werden unterhalb von 70 °C Wassergehalte oberhalb von 20 bis 25 Gew.-% erreicht, so dass die Gefahr einer Phasentrennung entsteht.

Partikelbildung. Schließlich beeinflusst die Temperatur des Pyrolyseteers auch die Bildung fester Reaktionsprodukte in Partikelform durch Polymerisations- und sonstige Altersreaktionen. Auch hier lässt sich eine Grenztemperatur von ca. 100 °C angeben, oberhalb derer die Bildung fester Reaktionsprodukte rasch und für die Verfahrensführung störend verläuft. Ihr Auftreten ist insbesondere bei der Behandlung der flüssigen Pyrolyseprodukte unerwünscht, da sie sich in den dort verwendeten Pumpen und Wärmetauschern ablagern und diese verstopfen oder beschädigen können. Dieses Problem wird durch die Rückführung eines Teils des Pyrolyseteers als Kühlmittel in der Abkühlvorrichtung noch verstärkt. Insbesondere die in der Abkühlvorrichtung enthaltene Verteilvorrichtung für das Kühlmittel in aufgrund ihrer Ausgestaltung beispielsweise als Düse besonders empfindlich gegenüber Verstopfung.

Besonders vorteilhaft ist es, wenn ferner ein Zerkleinerungsschritt umfasst wird, in dem die in dem Pyrolyseteer enthaltenen Feststoffpartikel auf einen maximalen Durchmesser von höchstens 500 µm, bevorzugt von höchstens 300 µm zerkleinert werden. Dieser Zerkleinerungsschritt wirkt der oben beschriebenen Partikelbildung entgegen. Zwar können die dabei erzeugten, kleineren Partikel potentiell als Keimkristalle wirken, ihr Größenwachstum bleibt aber bei Anwendung der oben beschriebenen, bevorzugten Verfahrensparameter begrenzt, wenn die Partikel auf die genannten Durchmesser zerkleinert werden. Die Akkumulation der Feststoffpartikel im Kühlmittelkreislauf wird dadurch begrenzt, dass sie mit dem Pyrolyseteerprodukt aus dem Verfahren ausgeleitet werden bzw. bei der nächsten Rückführung wieder zerkleinert werden.

Als besonders geeignet hat es sich gezeigt, wenn die Zerkleinerung der in dem Pyrolyseteer enthaltenen Feststoffpartikel mittels einer Nasszerkleinerungsvorrichtung erfolgt. Solche Vorrichtungen sind im Handel erhältlich und an die Einsatzbedingungen bei dem erfindungsgemäßen Verfahren anpassbar.

In Weiterbildung der Erfindung wird ein Teil des als Kühlmittel verwendeten Pyrolyseteers aus dem Kühlmittelkreislauf ausgeleitet und mit festen Pyrolyseprodukten zu einer Suspension vermischt, die als Einsatzstoff in einer nachgeschalteten Vergasungssfufe verwendet wird, in der ein Wasserstoff und Kohlenoxide enthaltendes Synthesegas als Produkt erhalten wird. Auf diese Weise wird die Biomasse letztlich in ein wertvolles, als Chemierohstoff oder umweltfreundlicher Brennstoff einsetzbares Produkt überführt.

In bevorzugter Ausgestaltung des erfindungsgemäßen Verfahrens ist der Pyrolysereaktor als Schneckenextruder ausgestaltet. Hierdurch wird einerseits der Transport des Gemisches aus Biomasse und Wärmeträger und somit das Einstellen einer definierten Verweilzeit unter Pyrolysebedingungen ermöglicht. Andererseits erfolgt bei dem Transport eine intensive Durchmischung der Gemischkomponenten, die den Wärmeübergang von dem Wärmeträger auf die Biomasse stark erhöht. Dabei hat es sich als günstig erwiesen, wenn als Wärmeträger Sand verwendet wird. Sand ist chemisch weitgehend inert und katalysiert somit keine unerwünschten Nebenreaktionen. Er weist gute Wärmerträgereigenschaften, eine hohe mechanische und thermische Stabilität sowie einen hohen Schmelzpunkt auf und ist preisgünstig im Handel erhältlich.

In einem weiteren Aspekt der Erfindung umfasst die Anlage nach der Erfindung eine Nasszerkleinerungsvorrichtung zur Einstellung eines maximalen Partikeldurchmessers von höchstens 500 µm, bevorzugt von höchstens 300 µm. Die vorteilhaften Effekte dieser Ausgestaltung der Anlage wurden oben im Zusammenhang mit der entsprechenden, bevorzugten Verfahrensausgestaltung erörtert.

Vorteilhaft ist es ferner, wenn die erfindungsgemäße Anlage eine Abzugsleitung zum Ausleiten eines Teils des Pyrolyseteers aus dem Kühlmittelkreislauf umfasst, so dass der Pyrolyseteer als Produkt auf einfache Weise gewonnen werden kann.

In Weiterbildung der Erfindung umfasst die Anlage auch eine Mischvorrichtung zum Mischen des ausgeleiteten Teils des als zweites Kühlmittel verwendeten Pyrolyseteers mit festen Pyrolyseprodukten zu einer Suspension und eine Vergasungsvorrichtung zum Vergasen der Suspension in ein Wasserstoff und Kohlenoxide enthaltendes Synthesegasprodukt. Durch diese Weiterbildung der erfindungsgemäßen Anlage wird die Biomasse letztlich in ein wertvolles, als Chemierohstoff oder umweltfreundlicher Brennstoff einsetzbares Produkt überführt.

### Ausführungs- und Zahlenbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

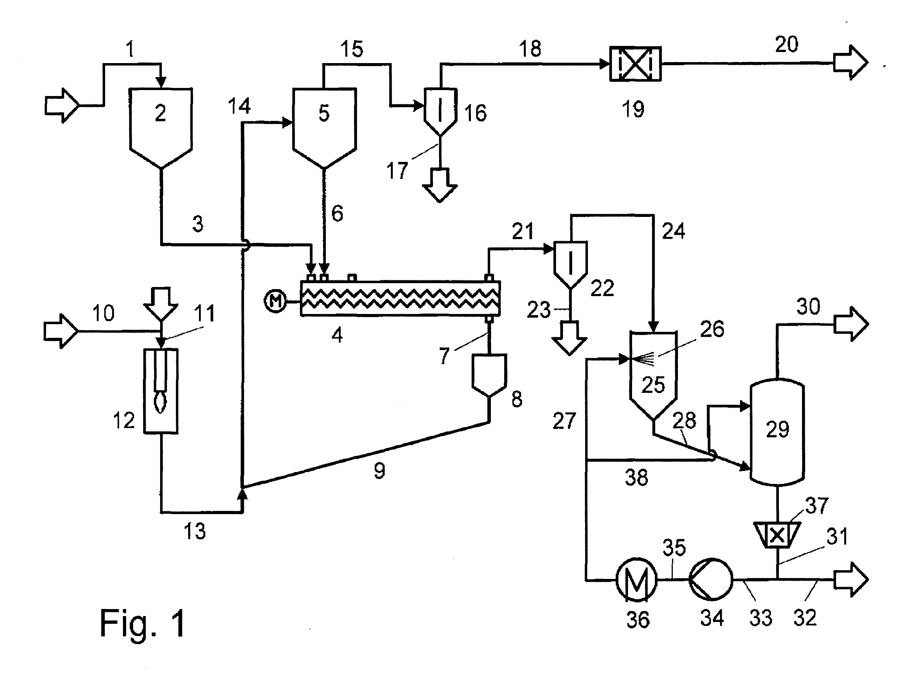

Es zeigt die einzige Figur
- Fig. 1: ein Fließschema einer beispielhaften Ausgestaltung des erfindungsgemäßen Verfahrens bzw. der erfindungsgemäßen Anlage.

In der in Fig. 1 schematisch dargestellten Ausgestaltung des erfindungsgemäßen Verfahrens bzw. der erfindungsgemäßen Anlage wird über Leitung 1 Biomasse in förderfähiger Form in das Silo 2 gefördert und dort zwischengelagert. Rohstoff des Verfahrens kann prinzipiell jede Art trockener, insbesondere lignocellulosehaltiger Biomasse sein, die durch Nutzung von Reststoffen aus der Agrar- und Forstwirtschaft sowie der Landschaftspflege anfällt. Im vorliegenden Ausführungsbeispiel wird getrocknetes und zerkleinertes Stroh als Biomasse eingesetzt.

Aus dem Silo 2 wird die Biomasse über Leitung 3 unter Verwendung bildlich nicht dargestellter Förder-, Dosierungs- und ggf. Zwischenlagerungsvorrichtungen dem Pyrolysereaktor 4 aufgegeben. Bei diesem handelt es sich um einen an sich bekannten Doppelschneckenreaktor mit zwei parallel zueinander angeordnet gleichsinnig drehenden und dabei ineinander greifenden Förderschnecken. Durch diesen Reaktoraufbau wird ein kontinuierlicher Biomassefluss durch den Reaktor und somit definierte Verweilzeiten von wenigen Sekunden, typischerweise zwischen 0,1 und 10 s, bevorzugt zwischen 1 bis 2 s, bei Pyrolysebedingungen gewährleistet. Gleichzeitig erfolgt eine intensive Vermischung der Biomasse mit dem als Wärmeträger verwendeten, vorerhitzten Sand, der aus einem Vorratsbehälter 5 entnommen und über Leitung 6 dem Pyrolysereaktor 4 aufgegeben wird. Hierdurch stellt sich eine Pyrolysetemperatur von ca. 500 °C ein.

Nach Durchlaufen des Pyrolysereaktors 4 wird ein Teil der festen Reaktionsprodukte (Pyrolysekoks) sowie der abgekühlte Wärmeträger über Leitung 7 unter Verwendung bildlich nicht dargestellter Fördervorrichtungen aus dem Pyrolysereaktor ausgeleitet, in dem Zwischenbehälter 8 gelagert und über Leitung 9 weitergeführt. Über Leitungen 10 und 11 werden ein gasförmiger Brennstoff und Verbrennungsluft zum Brenner 12 geführt und dort verbrannt. Als gasförmiger Brennstoff wird rückgeführtes Pyrolysegas und/oder Erdgas verwendet. Das dabei erzeugte Rauchgas wird über Leitung 13 aus dem Brenner ausgeleitet und mit den über Leitung 9 herangeführten Feststoffen vereinigt. Hierdurch erfolgt die Wiederaufheizung des Wärmeträgers sowie sein pneumatischer Transport über Leitung 14 zurück in den Vorratsbehälter 5, wodurch er für einen erneuten Einsatz im Pyrolysereaktor zur Verfügung steht.

Über Leitung 15 wird das teilweise abgekühlte Rauchgas aus dem Vorratsbehälter 5 ausgeleitet. Es enthält noch einen signifikanten Anteil an Feststoffen, insbesondere Pyrolysekoks. Die Feststoffe werden im Zyklon 16 abgeschieden und über Leitung 17 der bildlich nicht dargestellten Koksaufbereitung zugeführt. Über Leitung 18 wird das teilweise von Feststoffanteilen befreite Rauchgas einem Filter 19 zugeführt, in dem eine weitere Feststoffabscheidung erfolgt. Über Leitung 20 wird das weitgehend von Feststoffen befreite Rauchgas der Abgasentsorgung zugeführt.

Über Leitung 21 werden die gas- und dampfförmigen Pyrolyseprodukte aus dem Pyrolysereaktor ausgeleitet und einem Zyklon 22 zugeführt. In diesem erfolgt eine Abtrennung mitgerissener Feststoffe, insbesondere von Pyrolysekoks, der über Leitung 23 der bildlich nicht dargestellten Koksaufbereitung zugeführt wird. Über Leitung 24 werden die teilweise von Feststoffen befreiten gas- und dampfförmigen Pyrolyseprodukte der Abkühlvorrichtung 25 zugeführt, die als Quench, gefolgt von einem bildlich nicht dargestellten, mehrstufigen Kondensator ausgestaltet ist. Als Kühlmittel in dem mehrstufigen Kondensator dienen Pyrolyseteer und wässriges Pyrolyseprodukt. Da seit dem Verlassen des Pyrolysereaktors noch keine signifikante Abkühlung erfolgte, beträgt die Eintrittstemperatur der gas- und dampfförmigen Pyrolyseprodukte in die Abkühlvorrichtung immer noch rund 500 °C.

In der Abkühlvorrichtung erfolgt in eine Abkühlung der heißen, gas- und dampfförmigen Pyrolyseprodukte im direkten Wärmetausch gegen eingedüsten Pyrolyseteer als Kühlmittel, der eine Temperatur von rund 80 bis 90 °C aufweist, über Leitung 27 der Abkühlvorrichtung zugeführt und ebenfalls über eine geeignete Verteilungsvorrichtung 26, beispielsweise eine Düse, aufgegeben wird. Nachfolgend erfolgt eine weitere Abkühlung im mehrstufigen Kondensator im indirekten Wärmetausch gegen Pyrolyseteer mit einer Temperatur von rund 80 bis 90 °C und gegen wässriges Pyrolyseprodukt mit einer Temperatur von rund 20 bis 30 °C.

Durch die mehrstufige Abkühlung erfolgt eine Kondensation und Phasentrennung der dampfförmigen Pyrolyseprodukte und es scheidet sich der Pyrolyseteer ab, der noch einen geringen Feststoffanteil enthält. Der Pyrolyseteer und die verbliebenen gasförmigen Pyrolyseprodukte, das Pyrolysegas, verlassen über Leitung 28 und werden in eine Phasentrennvorrichtung 29 eingeleitet. In dieser erfolgt die weitere Abkühlung und Trennung des Pyrolyseteers von dem Pyrolysegas mittels über Leitung 38 zugeführten Pyrolyseteers als Kühlmittel. Das Pyrolysegas wird dann über Leitung 30 ausgeleitet und über Leitung 10 mindestens teilweise als gasförmiger Brennstoff zum Brenner 12 zurückgeführt. Da das Pyrolysegas noch eine erhebliche Menge an Wasser enthalten kann, wird es vor der Rückführung zum Brenner optional einer weiteren, nicht bildlich dargestellten Phasentrennvorrichtung zugeführt, in der Wasser abgetrennt wird. Letzteres kann, wie oben dargestellt, ebenfalls als Kühlmittel verwendet werden.

Der noch einen geringen Feststoffanteil enthaltende Pyrolyseteer wird über Leitung 31 aus der Phasentrennvorrichtung 29 abgeführt und teilweise über Leitung 32 als Flüssigprodukt aus dem Verfahren ausgeleitet. Ein anderer Anteil des Pyrolyseleers wird mittels einer Pumpe 34 über Leitungen 33 und 35 einem Wärmetauscher 36 zugeführt, dort auf eine Temperatur von rund 90 °C abgekühlt und anschließend über Leitung 27 und Leitung 38 zu der Abkühlvorrichtung als Kühlmittel zurückgeführt.

Erfindungsgemäß ist der Wärmetauscher 36 als Spiralwärmetauscher ausgestaltet. Die Temperatur des Pyrolyseteers beträgt beim Austritt aus dem Wärmetauscher 80 bis 90 °C. Das zu kühlende Medium, der Pyrolyseteer, und das Kühlmittel Wasser werden im Gegenstrom durch den Wärmetauscher geführt, um eine gleichmäßige thermische Belastung des Apparates und des Pyrolyseteers zu bewirken. Ferner bleibt durch diese Maßnahme die mittlere Temperaturdifferenz zwischen dem zu kühlenden Medium und dem Kühlmittel über die Längskoordinate des Wärmetauschers weitgehend konstant, wodurch eine insgesamt höhere Wärmeübertragung resultiert als bei Führung beider Medien im Gleichstrom.

Es wurde beobachtet, dass sich im Inneren der als Quench ausgestalteten Abkühlvorrichtung Feststoffpartikel mit Partikelgrößen im Bereich von 1 bis 5 mm ansammeln, die offenbar durch Polymerisationsreaktionen des Pyrolyseteers entstehen und sich bei der Abkühlung als feste Partikel abscheiden. Der Abkühlvorrichtung ist daher eine Nasszerkleinerungsvorrichtung des Typs Gorator nachgeschaltet. Sie ist inline in die Leitung 28 oder alternativ in Leitung 33 eingebaut und so ausgestaltet, dass er den maximalen Durchmesser der im Pyrolyseteer enthaltenen Partikel auf höchstens 500 µm begrenzt.

Wie bereits oben erörtert, wirken die Auswahl des Wärmetauschers, die gewählte Austrittstemperatur des Pyrolyseteers aus dem Wärmetauscher und das Vorhandensein der Nasszerkleinerungsvorrichtung in vorteilhafter Weise zusammen. Die geeigneten Wärmetauscher im Sinne der Erfindung, also beispielsweise Plattenwärmetauscher, Spiralwärmetauscher und Hohlschraubenrotationswärmetauscher, sind zur Beaufschlagung mit flüssigen Medien geeignet, die eine mittlere bis hohe dynamische Viskosität, beispielsweise oberhalb von 70 mPa·s, aufweisen. Ferner sind sie aufgrund der flächenhaften Ausbreitung des zu kühlenden Mediums durch den Wärmetauscher relativ unempfindlich gegenüber gegebenenfalls auftretenden Blockierungen durch Feststoffablagerungen. Die Bildung solcher Feststoffablagerungen in Partikelform wird dabei wirkungsvoll limitiert, wenn der Pyrolyseteer im Wärmetauscher vor Einleiten in die Abkühlvorrichtung auf eine Temperatur zwischen 70 und 100 °C, bevorzugt zwischen 80 und 90 °C abgekühlt wird. Bereits entstandene Feststoffpartikel werden in der Nasszerkleinerungsvorrichtung zerkleinert. Wenn dabei der maximale Durchmesser von höchstens 500 µm begrenzt wird, sind die Feststoffablagerungen in den im Kühlmittelkreislauf angeordneten Apparaten, beispielsweise im Wärmetauscher, begrenzt, so dass dort keine Verstopfungen oder Wirksamkeitsverluste auftreten und ein stabiler Anlagenbetrieb gewährleistet ist.

### Zahlenbeispiel und Vergleichsbeispiel

In den nachfolgenden Zahlenbeispielen und Vergleichsbeispielen wird der Betrieb eines erfindungsgemäßen Wärmetauschers, hier eines Spiralwärmetauschers, mit einem nicht erfindungsgemäßen Wärmetauscher, hier einem Rohrbündelwärmetauscher, verglichen.Die Wärmetauscher waren dabei so ausgestaltet, dass sie einen definierten Massenstrom an Pyrolyseteer von 30.000 bis 35.000 kg/h bei einer definierten Austrittstemperatur Tₒ des Pyrolyseteers ermöglichten.

**Tabelle 1: Reynolds-Zahlen und Wärmeübergangskoeffizienten für den Betrieb eines Rohrbündelwärmetauschers und eines Spiralwärmetauschers zur Kühlung von Pyrolyseteer in Abhängigkeit von der Betriebszeit**

| **Zeit/h** | **Re Rohrbündel-WT** (Vergleich) | **Re Spiral-WT** (Erfindung) | **U/W/(m²K) Rohrbündel-WT** (Vergleich) | **U/W/(m²·K**) **Spiral-WT** (Erfindung) |
|---|---|---|---|---|
| 0 | 2031 | 16677 | 1076 | 105 |
| 1 | 1555 | 13689 | 643 | 134 |
| 2 | 741 | 15250 | 314 | 150 |
| 3 | 926 | 19800 | 67 | 140 |

In Tabelle 1 werden Reynolds-Zahlen und Wärmeübergangskoeffizienten für den Betrieb eines Rohrbündelwärmetauschers und eines Spiralwärmetauschers zur Kühlung von Pyrolyseteer in Abhängigkeit von der Betriebszeit zusammengestellt. Man erkennt, dass der erfindungsgemäße Spiralwärmetauscher während der gesamten untersuchten Betriebsdauer im turbulenten Strömungsbereich arbeitet; die gemessenen Wärmeübergangskoeffizienten bleiben hier zeitlich relativ konstant. Dagegen arbeitet der untersuchte Rohrbündelwärmetauscher von Anfang an im Bereich laminarer Strömung, wobei die ermittelten Reynolds-Zahlen zeitlich noch weiter abnehmen. Eine gleichsinnig verlaufende, drastische Abnahme ist auch für die gemessenen Wärmeübergangskoeffizienten zu erkennen. Dies wird auf die zunehmende Verstopfung des Rohrbündelwärmetauschers durch abgelagerte Feststoffpartikel zurückgeführt. Eine entsprechende Effizienzabnahme des erfindungsgemäßen Spiralwärmetauschers wird dagegen nicht beobachtet. Offenbar treten hier entweder weniger Feststoffablagerungen auf oder sie beeinträchtigen aufgrund der flächenhaften Ausbreitung des Pyrolyseteers durch den Spiralwärmetauscher dessen Wirksamkeit nur wenig.

Ferner wird angenommen werden, dass es aufgrund der turbulenten Strömungsverhältnisse zu einer Selbstreinigung im Spiralwärmetauscher kommt, bei der bereits abgelagerte Feststoffpartikel wieder entfernt werden, so dass der Wärmeübergang nicht beeinträchtigt wird.

Das oben beschriebene Verhalten bestätigt sich auch durch Betrachtung der zur Einstellung von Austrittstemperaturen des Pyrolyseteers im erfindungsgemäßen Bereich von 70 bis 100 °C benötigten Kühlwassermengen, Tabelle 2. Auch eine Steigerung der Kühlwassermenge beim Rohrbündelwärmetauscher vermag den kontinuierlichen Anstieg der Austrittstemperatur des Pyrolyseteers nicht aufzuhalten. Dies wird auf die kontinuierliche Effizienzabnahme des Rohrbündelwärmetauschers durch Verstopfung und Belegung der Wärmeaustauschflächen mit Feststoffpartikeln zurückgeführt.

**Tabelle 2: Kühlwassermengen m(H₂O) und Austrittstemperaturen Tₒ des Pyrolyseteers beim Betrieb eines Rohrbündelwärmetauschers und eines Spiralwärmetauschers zur Kühlung von Pyrolyseteer in Abhängigkeit von der Betriebszeit**

| **Zeit / h** | **m(H₂O) / kg/h Rohrbündel-WT** (Vergleich) | **Tₒ/°C Rohrbündel-WT** (Vergleich) | **m(H₂O) / kg/h Spiral-WT** (Erfindung) | **Tₒ/°C Spiral-WT** (Erfindung) |
|---|---|---|---|---|
| 0 | 6 | 89 | 3 | 87 |
| 1 | 6 | 90 | 3 | 88 |
| 2 | 7 | 92 | 5 | 83 |
| 3 | 9 | 94 | 4 | 79 |

### Gewerbliche Anwendbarkelt

Mit der Erfindung wird eine Verbesserung eines Schnellpyrolyseverfahrens zur Verfügung gestellt, die es ermöglicht, trotz der Verwendung des reaktiven und temperatursensitiven Pyrolyseteers als Kühlmittel in der Abkühlvorrichtung einen stabilen Anlagenbetrieb und somit eine höhere zeitliche Verfügbarkeit der Pyrolyseanlage zu gewährleisten. Ferner weist das gewonnene Pyrolyseteer-Produkt zeitlich konstant bleibende Eigenschaften auf, wodurch seine Verwendung als Kühlmittel im Verfahren selbst ermöglicht wird und ein definiertes Produkt mit erwünschten Eigenschaften erhalten wird.

### Bezugszeichenliste

- 1: Leitung
- 2: Silo
- 3: Leitung
- 4: Pyrolysereaktor
- 5: Vorratsbehälter
- 6: Leitung
- 7: Leitung
- 8: Zwischenbehälter
- 9: Leitung
- 10: Leitung
- 11: Leitung
- 12: Brenner
- 13: Leitung
- 14: Leitung
- 15: Leitung
- 16: Zyklon
- 17: Leitung
- 18: Leitung
- 19: Filter
- 20: Leitung
- 21: Leitung
- 22: Zyklon
- 23: Leitung
- 24: Leitung
- 25: Abkühlvorrichtung
- 26: Verteilungsvorrichtung
- 27: Leitung
- 28: Leitung
- 29: Phasentrennvorrichtung
- 30: Leitung
- 31: Leitung
- 32: Leitung
- 33: Leitung
- 34: Pumpe
- 35: Leitung
- 36: Spiralwärmetauscher
- 37: Nasszerkleinerungsvorrichtung
- 38: Leitung

## Patentansprüche

1. Verfahren zur Herstellung von Pyrolyseprodukten aus Biomasse, insbesondere lignocellulosehaltiger Biomasse, umfassend folgende Schritte:
a) Bereitstellen der Biomasse in förderfähiger Form,
b) Aufheizen eines Wärmeträgers in einer Heizvorrichtung in direktem Wärmetausch gegen ein heißes Rauchgas, das durch Verbrennen eines oder mehrerer Brennstoffe mit einem sauerstoffhaltigen Oxidationsmittel erzeugt wird, Ausleiten des aufgeheizten Wärmeträgers und des abgekühlten Rauchgases aus der Heizvorrichtung,
c) Inkontaktbringen der Biomasse mit dem aufgeheizten Wärmeträger in einem Pyrolysereaktor, wobei gas- und dampfförmige sowie feste Pyrolyseprodukte erhalten und aus dem Pyrolysereaktor ausgeleitet werden,
d) Abtrennen der festen Pyrolyseprodukte von den gas- und dampfförmigen Pyrolyseprodukten mittels einer ersten mechanischen Trennvorrichtung und Ausleiten der festen Pyrolyseprodukte aus dem Verfahren,
e) Abkühlen der an festen Pyrolyseprodukten abgereicherten gas- und dampfförmigen Pyrolyseprodukte in einer Abkühlvorrichtung, wobei ein Pyrolysegas und ein Pyrolyseteer erhalten werden,
f) Abtrennen des Pyrolysegases von dem Pyrolyseteer mittels einer zweiten mechanischen Trennvorrichtung und Ausleiten des Pyrolysegases aus dem Verfahren, wobei das Pyrolysegas mindestens teilweise als Brennstoff nach Verfahrensschritt b) zurückgeführt wird,
g) mindestens teilweise Rückführung des Pyrolyseteers nach Verfahrensschritt e) als Kühlmittel,
wobei der nach Verfahrensschritt e) zurückgeführte Pyrolyseteer vor Einleiten in die Abkühlvorrichtung in einem Wärmetauscher, ausgewählt aus der Gruppe umfassend Plattenwärmetauscher, Spiralwärmetauscher und Hohlschraubenrotationswärmetauscher, abgekühlt wird.

2. Verfahren nach Anspruch 1, **dadurch gekennzeichnet, dass** der nach Verfahrensschritt e) zurückgeführte Pyrolyseteer vor Einleiten in die Abkühlvorrichtung auf eine Temperatur zwischen 70 und 100 °C, bevorzugt zwischen 80 und 90 °C abgekühlt wird.

3. Verfahren nach Anspruch 1 oder 2, **dadurch gekennzeichnet, dass** ferner ein Zerkleinerungsschritt umfasst wird, in dem die in dem Pyrolyseteer enthaltenen Feststoffpartikel auf einen maximalen Durchmesser von höchstens 500 µm, bevorzugt von höchstens 300 µm zerkleinert werden.

4. Verfahren nach einem der vorigen Ansprüche, **dadurch gekennzeichnet, dass** die Zerkleinerung der in dem Pyrolyseteer enthaltenen Feststoffpartikel mittels einer Nasszerkleinerungsvorrichtung erfolgt.

5. Verfahren nach einem der vorigen Ansprüche, **dadurch gekennzeichnet, dass** ein Teil des als Kühlmittel verwendeten Pyrolyseteers aus dem Kühlmittelkreislauf ausgeleitet und mit festen Pyrolyseprodukten zu einer Suspension vermischt wird, die als Einsatzstoff in einer nachgeschalteten Vergasungsstufe verwendet wird, in der ein Wasserstoff und Kohlenoxide enthaltendes Synthesegas als Produkt erhalten wird.

6. Verfahren nach einem der vorigen Ansprüche, **dadurch gekennzeichnet, dass** der Pyrolysereaktor als Schneckenextruder ausgestaltet ist und dass als Wärmeträger Sand verwendet wird.

7. Anlage zur Herstellung von Pyrolyseprodukten aus Biomasse, insbesondere lignocellulosehaltiger Biomasse, umfassend folgende Anlagenteile:
- Fördervorrichtungen für die bereitgestellte Biomasse, den Wärmeträger und die festen Pyrolyseprodukte,
- eine Heizvorrichtung zum Aufheizen eines Wärmeträgers in direktem Wärmetausch gegen ein heißes Rauchgas, umfassend Mittel zum Zuleiten des kalten Wärmeträgers, zum Ableiten des aufgeheizten Wärmeträgers, zum Zuleiten sauerstoffhaltigen Oxidationsmittels und eines oder mehrerer Brennstoffe und zum Ableiten eines abgekühlten Rauchgases,
- einen Pyrolysereaktor, umfassend Mittel zum Ableiten der gas- und dampfförmigen sowie festen Pyrolyseprodukte,
- eine erste mechanische Trennvorrichtung zum Abtrennen der festen Pyrolyseprodukte von den gas- und dampfförmigen Pyrolyseprodukten,
- eine Abkühlvorrichtung zum Abkühlen der an festen Pyrolyseprodukten abgereicherten gas- und dampfförmigen Pyrolyseprodukte,
- eine zweite mechanische Trennvorrichtung zum Abtrennen des Pyrolysegases von dem Pyrolyseteer, umfassend Mittel zum Ausleiten des Pyrolysegases aus dem Verfahren und zum mindestens teilweise Rückführen des Pyrolysegases als Brennstoff nach Verfahrensschritt b), sowie Mittel zum Ausleiten des Pyrolyseteers und zum mindestens teilweise Rückführen des Pyrolyseteers zu der Abkühlvorrichtung als Kühlmittel,
- einen Wärmetauscher, ausgewählt aus der Gruppe umfassend Plattenwärmetauscher, Spiralwärmetauscher und Hohlschraubenrotationswärmetauscher, zum Abkühlen des zu der Abkühlvorrichtung als Kühlmittel zurückgeführten Pyrolyseteers.

8. Anlage nach Anspruch 7, ferner umfassend eine Nasszerkleinerungsvorrichtung zur Einstellung eines maximalen Partikeldurchmessers von höchstens 500 µm, bevorzugt von höchstens 300 µm.

9. Anlage nach einem der vorigen Ansprüche, ferner umfassend eine Abzugsleitung zum Ausleiten eines Teils des Pyrolyseteers aus dem Kühlmittelkreislauf.

10. Anlage nach einem der vorigen Ansprüche, ferner umfassend eine Mischvorrichtung zum Mischen des ausgeleiteten Teils des als zweites Kühlmittel verwendeten Pyrolyseteers mit festen Pyrolyseprodukten zu einer Suspension.

11. Anlage nach einem der vorigen Ansprüche, ferner umfassend eine Vergasungsvorrichtung zum Vergasen der Suspension in ein Wasserstoff und Kohlenoxide enthaltendes Synthesegasprodukt.
